# FASCICULE DE BREVET EUROPEEN

(11) **EP 0 878 124 B1**
(45) Date de publication et mention de la délivrance du brevet: **16.04.2003**
(21) Numéro de dépôt: 98440096.0
(22) Date de dépôt: 13.05.1998
(51) Int. Cl.: A01G 9/02

(54) **Conteneur de fleurissement**
Blumenbehälter
Container for flowers

(30) Priorité: 13.05.1997 FR 9706014
(43) Date de publication de la demande: 18.11.1998
(73) Titulaire: Grisier, Didier, 25250 L'Isle sur le Doubs (FR)
(72) Inventeur: Grisier, Didier, 25250 L'Isle sur le Doubs (FR)
(74) Mandataire: Nithardt, Roland

(56) Documents cités:
- EP-A- 0 217 997
- DE-U- 9 412 693
- FR-A- 2 530 408
- FR-A- 2 542 594
- FR-A- 2 610 787
- US-A- 5 009 018

## Description

La présente invention concerne un conteneur de fleurissement constitué d'un bac comportant au moins un fond et plusieurs faces latérales.

De manière connue, dans le domaine du fleurissement des plantes en pot, et pour mettre en valeur la floraison, il est intéressant de répartir les plantes autour du maximum de volume du contenant dans lequel elle se trouve plantée. Dans le cas de plantes tombantes, les parois de la jardinière sont recouvertes d'office par les tiges fleuries, tandis que pour les plantes qui poussent en hauteur, dans un pot ou une jardinière classique, la densité florale a tendance à se concentrer sur le dessus, ce qui parfois va à l'encontre de l'effet recherché. Par exemple pour orner les bords des routes, lorsque l'on souhaite une décoration en hauteur, ce type de plante ne pourrait convenir avec de tels conteneurs, car la majeure partie des fleurs formées ne serait pas visible depuis le sol.

Pour remédier à ce problème, différents conteneurs de fleurissement ont été mis au point dans le but de répartir les fleurs dans l'espace. Ainsi, dans le brevet français publié sous le numéro FR-A-2542594, il est décrit une structure métallique, par exemple un cube, formée seulement par ses arêtes. Ceci permet de placer des plantes au travers de la structure, d'y tasser de la terre, de planter également sur les faces latérales et d'obtenir des fleurs par les différents côtés. Cependant, toute cette surface libre ainsi créée améliore le volume de répartition des fleurs mais au détriment d'un maintien efficace du support de culture tel que la terre ou le terreau, en raison des ouvertures réparties sur toute la surface du conteneur. Ce dernier est donc limité à une utilisation au sol et ne peut en aucune façon être suspendu. Ainsi, ce type de matériel reste d'un usage limité puisque pour certaines plantes pour lesquelles ces ouvertures n'offrent pas d'avantage particulier, il reste préférable d'utiliser un conteneur fermé.

Il est bien connu également d'utiliser des structures ajourées en matière plastique, destinées à être suspendues. La répartition du fleurissement est obtenue au moyen d'alvéoles nombreuses réparties sur la surface de ce conteneur. Celui-ci maintient le support de culture dans le volume, et le nombre important d'alvéoles permet de répartir un grand nombre de plantes dans ce même volume. Il s'agit généralement de contenants sphériques ou cubiques. Ils peuvent être suspendus ou placés autour d'un mât. D'une part, le conteneur doit présenter le plus grand nombre d'alvéoles pour permettre une répartition et une densité des fleurs optimales. D'autre part, la superficie des ouvertures doit être limitée pour contenir efficacement le support de culture. Ainsi, l'augmentation de la taille ou du nombre d'alvéoles se fait au détriment du maintien de la terre dans la structure, ce qui limite là encore l'utilisation de ce type de conteneur à quelques variétés de plantes et donc à une saison.

En d'autres termes, pour couvrir une majorité de plantes permettant un fleurissement pratiquement tout au long de l'année, il est nécessaire d'avoir un bac différent par variété de plante, d'où un problème de coût d'investissement et également d'encombrement lors du stockage.

Pour obtenir un fleurissement en volume, il existe également dans le commerce des jardinières dont le bord comporte des décrochements, ménageant des ouvertures pour le fleurissement latéral. Si la plante est tombante, des volets de condamnation des alvéoles sont prévus, ce qui permet de reformer complètement les parois latérales, et ainsi d'augmenter la quantité de terre ou de terreau dans la jardinière. Dans ce type de contenant, on retrouve une concentration élevée de plantes fleuries sur le dessus, mais avec une amélioration de la répartition des fleurs grâce aux alvéoles latérales. Cependant, ces ouvertures limitent d'autant la hauteur de terre pouvant être contenue.

D'autres conteneurs existent avec des parois amovibles. Dans la publication EP-A-217997, le conteneur de fleurissement est composé de panneaux assemblés de manière à moduler sa hauteur et son diamètre. Certains panneaux comportent une porte basculante formant une ouverture pour les branches de la plante. Néanmoins, ce conteneur n'est pas modulable en fonction du type de plantes étant donné que le format des ouvertures est fixe. De plus, il n'a pas une structure rigide qui lui permettrait d'être utilisé en suspension.

Dans la publication FR-A-2530408, le conteneur comporte des parois latérales amovibles pour faciliter le dépotage d'une plante. Par extension, ces parois peuvent être remplacées par des parois mitoyennes pour coupler deux jardinières. Ce conteneur est un bac pour plantes aériennes et non un bac de fleurissement. Les parois ne contiennent pas d'ouvertures, il ne peut pas se suspendre et ne peut présenter qu'une forme carrée ou rectangulaire.

La publication DE-U-9412693 décrit un conteneur de compostage utilisé uniquement posé au sol et comportant des évidements. Les parois de ce conteneur ne sont pas amovibles et il n'est pas modulable en fonction du type de plantes.

Enfin, la publication FR-A-2610787 décrit un bac de culture comportant un fond et des parois latérales amovibles constitués d'un treillis couvert d'un film en matière plastique permettant le passage des racines des plantes. Il ne peut pas se suspendre et n'est pas non plus modulable en fonction du type de plantes.

Par conséquent, les différentes solutions existantes ne sont pas entièrement satisfaisantes, car elles ne permettent de résoudre qu'une partie du problème. Dans la plupart des conteneurs de l'art antérieur, l'utilisateur doit adapter la plante au bac, l'inverse n'existant pas.

La présente invention vise à combler ce manque, en proposant un bac unique adaptable à différents types de plantes, tombantes ou non, permettant de choisir la quantité, la forme et la répartition des ouvertures pour une disposition adaptée à la plante, à la saison, en fonction de chaque cas particulier, et permettant également une décoration en hauteur ou par terre. On obtient par conséquent un bac polyvalent ou multi-usage.

Dans ce but, l'invention concerne un conteneur de fleurissement tel que défini dans la revendication 1; son fond et ses faces latérales sont rigidement solidaires pour former une structure rigide indéformable, au moins une face latérale comporte au moins un cadre fixe ajouré et au moins un panneau central amovible, et le panneau central amovible comporte au moins une ouverture. Ainsi, il permet une pousse latérale si le type de plante le nécessite et offre la possibilité de choisir la répartition et la proportion de surface libre supplémentaire dans ledit conteneur.

Le fait que ledit panneau amovible comporte au moins une ouverture permet une pousse latérale si le type de plante le nécessite.

De même, le conteneur peut comporter un couvercle, également pourvu d'au moins une ouverture. Il est donc possible de répartir les plantes même sur le dessus du bac, au moyen de ce couvercle facultatif.

Ces différentes ouvertures peuvent avoir une forme choisie parmi le groupe comprenant : une forme carrée, rectangulaire, circulaire, ovale, en arc de cercle, lenticulaire, en tuile, en L, en étoile, en coeur.

Le bac peut aussi présenter différentes formes et de préférence une forme choisie parmi le groupe comprenant : un cube, un parallélépipède rectangle, un cylindre, un tétraèdre, un octaèdre, un décaèdre, une pyramide, une sphère.

Selon un premier mode de réalisation, le cadre comporte au moins deux glissières parallèles agencées pour recevoir les bords latéraux du panneau amovible. Ce dernier peut en outre comporter une poignée à proximité d'au moins un de ses bords libres. Ainsi, chaque panneau est ôté, changé ou remis en place très rapidement et facilement.

Dans une variante de réalisation, le conteneur comporte un double fond destiné à former une réserve d'eau, un tube d'alimentation en eau débouchant dans ladite réserve et des mèches s'étendant de la réserve à l'intérieur du bac pour remonter l'eau par capillarité. Ainsi, le taux d'humidité nécessaire aux plantes peut être maintenu sans difficulté.

Le conteneur peut également comporter une couronne d'arrosage disposée dans la partie supérieure du bac et munie d'orifices goutteurs et un tube d'alimentation en eau raccordé à ladite couronne. De plus, il peut comporter au moins un faisceau de filaments goutteurs relié à la couronne d'arrosage par une tête de distribution, l'extrémité libre de chaque filament goutteur étant agencée pour être introduite dans lesdites plantes. On obtient ainsi un dispositif d'arrosage au coeur de chaque plante.

Dans une variante de réalisation préférée, le conteneur comporte au moins une ouverture ou un fourreau agencé pour permettre le passage d'un mât ou au moins deux anneaux répartis et fixés sur une des faces latérales. Le conteneur peut donc être placé en hauteur de différentes manières, selon l'effet décoratif recherché.

Selon un mode de réalisation, le bac se compose de deux demi bacs séparés sur une partie de leur hauteur à partir du fond du bac par un évidement rectiligne, perpendiculaire audit fond et agencé pour recevoir un montant parallèle au sol. Cette structure permet une mise en place différente, par exemple sur une barrière, un bord de balcon ou un garde-corps.

La présente invention et ses avantages apparaîtront mieux dans la description suivante d'un exemple de réalisation et en référence aux dessins annexés, dans lesquels:
- la figure 1 est une vue en perspective d'un premier exemple de réalisation du conteneur de fleurissement selon l'invention,
- la figure 2 est une vue de dessus d'un second exemple de conteneur de fleurissement,
- la figure 3 est une vue en perspective d'une variante de réalisation du conteneur,
- les figures 4a à 4e sont des vues en plan de différents panneaux amovibles,
- la figure 5 est une vue en perspective d'une variante de réalisation d'un conteneur de la figure 1, et
- la figure 6 est une vue en perspective d'une autre variante de réalisation du conteneur de la figure 5.

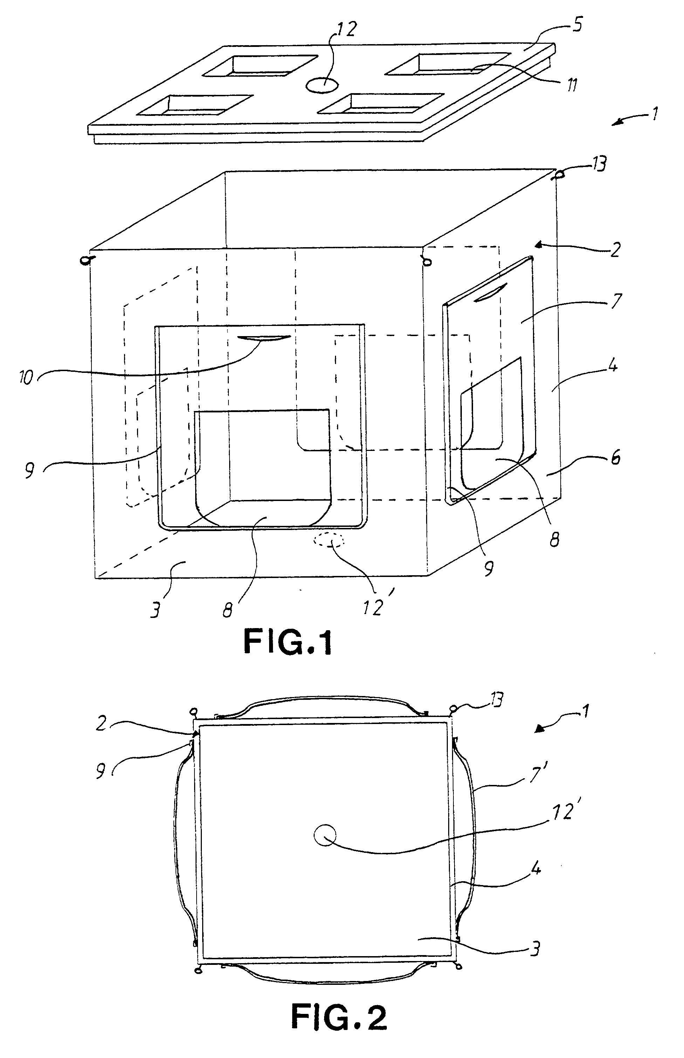

En référence à la figure 1, la présente invention concerne un conteneur de fleurissement 1 constitué par un bac 2 parallélépipédique comportant un fond 3, des faces latérales 4 et un couvercle 5. Les quatre faces latérales 4 se composent d'un cadre fixe 6 ajouré et d'un anneau central amovible 7. Dans cet exemple, les quatre panneaux amovibles 7 utilisés sont identiques, et comportent une ouverture 8. Ils sont placés dans le cadre 6 de chaque face latérale 4 au moyen de glissières 9. Pour faciliter la manipulation de ces panneaux 7, une poignée 10 est prévue. Les panneaux 7 étant réversibles, ils peuvent être positionnés à l'envers, afin que l'ouverture soit placée vers le haut du cadre 6. Le couvercle 5, destiné à être emboîté sur le bac 2, comporte également des ouvertures 11 qui peuvent être différentes de celle des panneaux amovibles latéraux 7. Le couvercle 5 et le fond 3 du conteneur 1 comportent respectivement une ouverture 12 et 12' en regard qui permettent de le positionner autour d'un mât. Une autre possibilité est de le suspendre, au moyen des anneaux 13 prévus sur les faces latérales 4. Le bac 2 peut encore être simplement posé sur son fond 3.

La figure 2 représente un autre exemple de réalisation de conteneur de fleurissement 1, vu de dessus. Dans cet exemple, le bac 2 comporte un fond 3 et des faces latérales 4 constituées par un cadre 6 sur lequel sont fixées des glissières 9. Chaque face 4 comporte, dans les glissières 9, des panneaux centraux amovibles 7' bombés. Le fond 3 comporte une ouverture 12 ' permettant le passage d'un mât. Le conteneur de fleurissement 1 possède également des anneaux de fixation 13 répartis sur la périphérie du bord supérieur du bac, pour l'accrocher en hauteur par exemple au moyen de chaînettes ou de câbles.

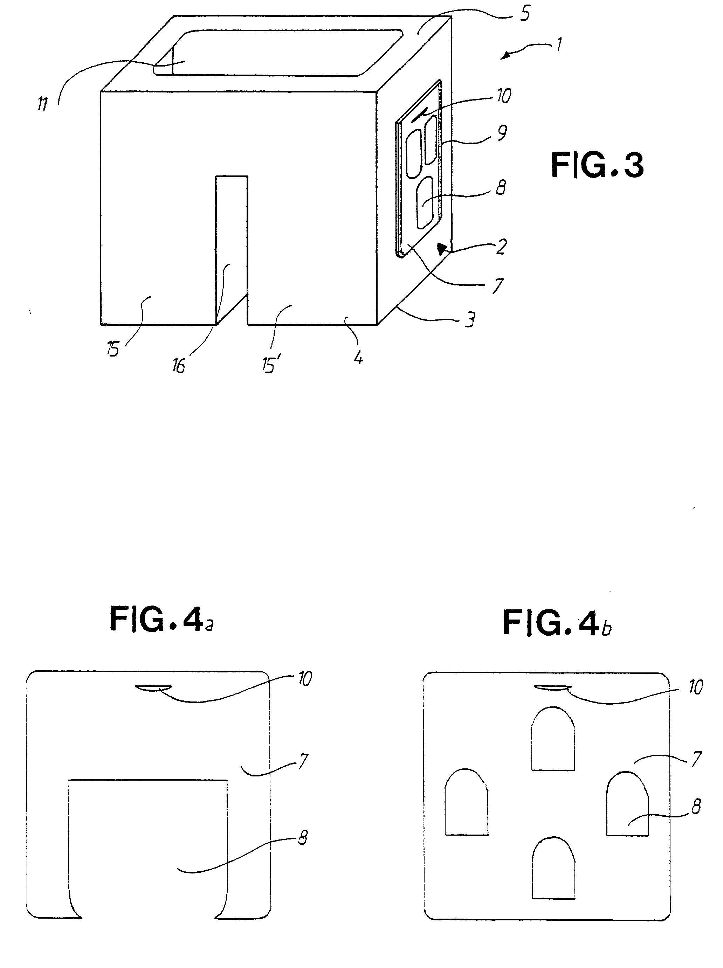

Sur la figure 3, une autre variante de conteneur selon l'invention est représentée. Dans cette forme de réalisation destinée plus particulièrement à la décoration des balcons, des garde-corps ou des barrières à montants horizontaux quelconques, le conteneur 1 ayant la forme d'un parallélépipède rectangle se sépare en deux demi bacs 15 et 15' à partir du fond 3. L'espace 16 ménagé entre les deux demi bacs 15 et 15' permet de positionner un tel conteneur sur le dessus d'un montant horizontal. Le conteneur 1 présente à titre d'exemple non limitatif un panneau central amovible 7 à trois ouvertures 8, avec une poignée 10, placé dans une glissière 9. Le bac 2 est muni d'un couvercle 5 à ouverture 11.

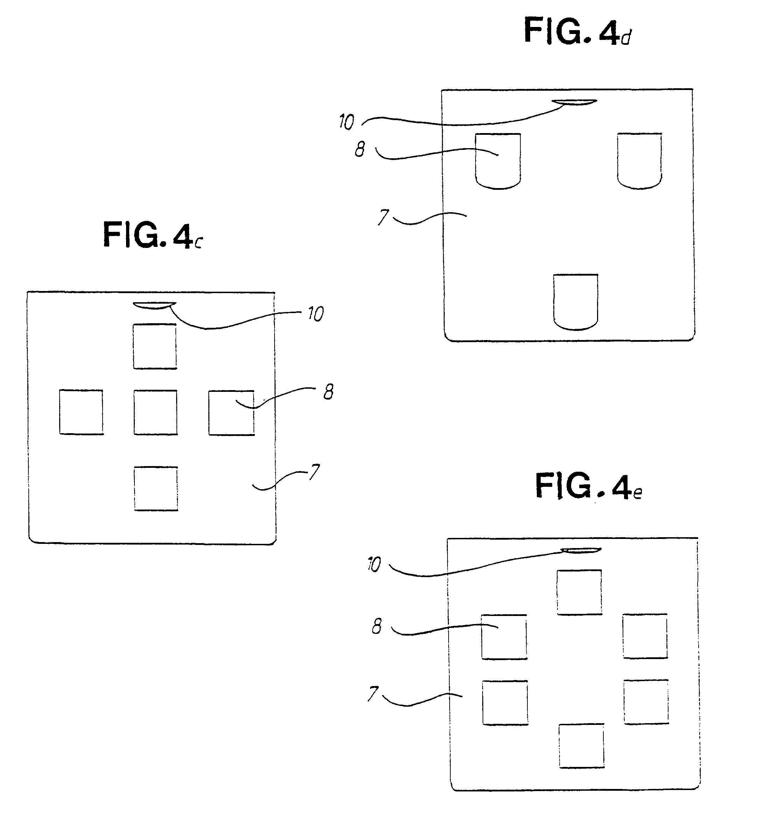

Les figures 4a à 4e représentent quelques exemples de panneaux amovibles 7. Suivant la saison ou le type de plante souhaitée, le choix parmi les panneaux amovibles 7 permet d'adapter le conteneur 1 à chaque plante particulière, en faisant varier la surface de l'ouverture 8, son positionnement, ou encore la quantité d'ouvertures. De même, le couvercle 5, facultatif, permet de s'adapter au type de fleurissement choisi. Les exemples illustrés ne sont pas du tout limitatifs.

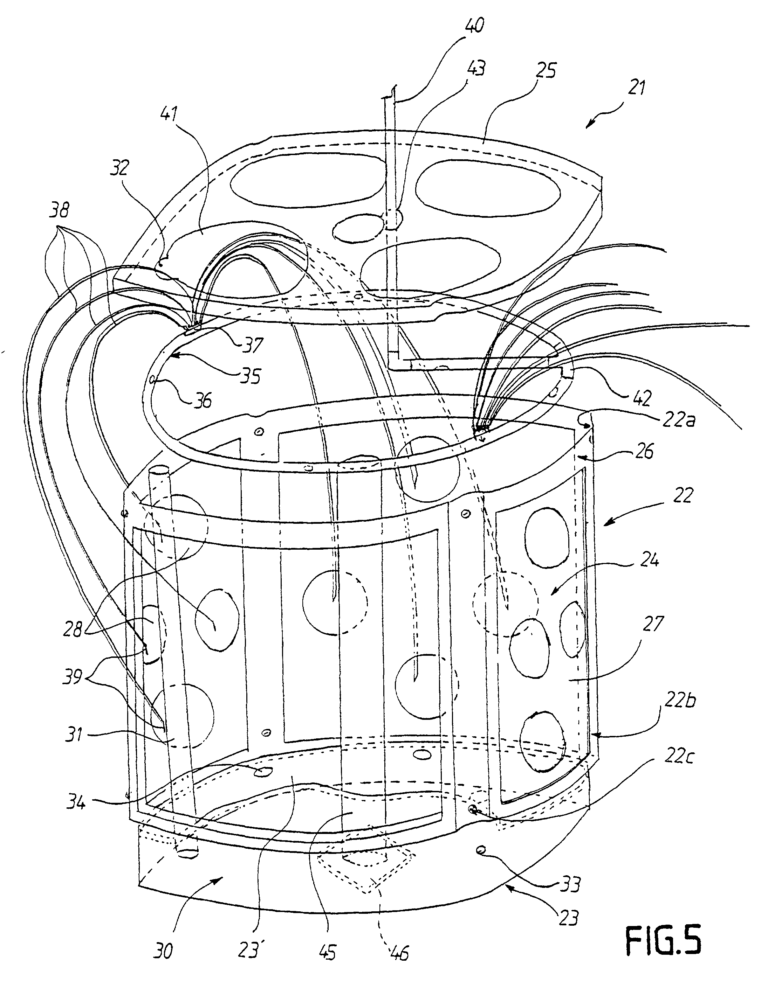

La figure 5 illustre un conteneur de fleurissement 21 correspondant à une variante de réalisation du conteneur de la figure 1. Il comporte un bac 22 pourvu d'un fond 23, de faces latérales 24 et d'un couvercle 25. Comme dans la figure 1, les quatre faces latérales 24 se composent d'un cadre fixe 26 et d'un panneau central amovible 27 pourvu d'ouvertures 28. Dans la figure 5, un des cadres 26 est laissé ouvert, sans panneau central, pour visualiser l'intérieur du bac. Ce bac 22 se distingue du bac 2 essentiellement en ce qu'il comporte un dispositif d'arrosage intégré pour faciliter l'arrosage des plantes et assurer le maintien d'un taux d'humidité toujours suffisant à l'intérieur dudit bac.

Ce dispositif d'arrosage intégré comporte une réserve 30 localisée dans le fond 23 du bac et définie par un double fond 23' représenté partiellement découpé. Ce double fond peut être rapporté dans ledit bac ou intégré, comme dans l'exemple représenté, où il est formé par une double paroi du bac 22 : une paroi intérieure 22a et une paroi extérieure 22b. Ces parois 22a, 22b sont assemblées rigidement par des rivets 22c ou tout autre organe de fixation au niveau des faces latérales 24. La réserve d'eau 30 est alimentée en eau par un tube 31 disposé verticalement sensiblement dans l'angle formé entre deux parois latérales 24 consécutives, se prolongeant légèrement au-delà du couvercle 25 et s'étendant jusqu'à l'intérieur de ladite réserve 30. Le couvercle 25 comporte une encoche 32 prévue dans une de ses ouvertures 41 pour recevoir l'extrémité du tube 31 qui dépasse pour être accessible par un tuyau d'arrosage. La réserve 30 comporte un trou 33 de trop plein et des orifices 34 destinés à recevoir des mèches (non représentées) de drainage. Ces mèches peuvent être réalisées en fibres de coton ou autre et assurent la remontée de l'eau dans les mottes de terre disposées dans le bac 22 par capillarité. De préférence, le double fond 23' est tapissé d'un tapis réalisé dans la même matière que les mèches.

Le dispositif d'arrosage comporte également une couronne d'arrosage 35 s'étendant dans le périmètre intérieur du bac 22 juste en dessous du couvercle 25. Cette couronne d'arrosage 35 comporte des orifices goutteurs 36 répartis, régulièrement ou non, sur son périmètre et de préférence localisés dans la zone médiane de chaque paroi latérale 24. Elle comporte aussi deux têtes de distribution 37 diamétralement opposées, chaque tête de distribution étant reliée à un faisceau de filaments goutteurs 38 terminés par des épingles 39 qui vont se loger dans les mottes de terre des plantes par l'extérieur dudit bac 22 au travers des ouvertures 41 prévues dans ledit couvercle 25. Ces filaments goutteurs 38 sont constitués de tubes très fins en matière synthétique, d'un diamètre d'environ 0,4 mm. La couronne d'arrosage 35 est alimentée en eau par un tube 40 relié à une de ses extrémités par un raccord 42 à la couronne et sortant du couvercle 25 par un orifice 43 prévu à cet effet et proche du centre. Ce tube 40 est connecté à un tuyau d'arrosage (non représenté).

Ainsi, avec ce dispositif d'arrosage qui peut d'ailleurs ne comporter que la réserve d'eau 30 ou que la couronne d'arrosage 35 ou bien les deux permet de maintenir un taux d'humidité optimal pour une bonne croissance des plantes et facilite ainsi l'arrosage.

Le conteneur 21 comporte encore un fourreau central 45 disposé dans l'axe dudit bac 22 et traversant ce dernier sur toute sa hauteur. Ce fourreau central 45 est destiné à recevoir un mat de suspension (non représenté) permettant la suspension d'un conteneur ou de plusieurs conteneurs empilés. Une empreinte 46 est prévue dans le fond 23 du bac pour loger la platine de support de forme correspondante prévue à la base dudit mat de suspension.

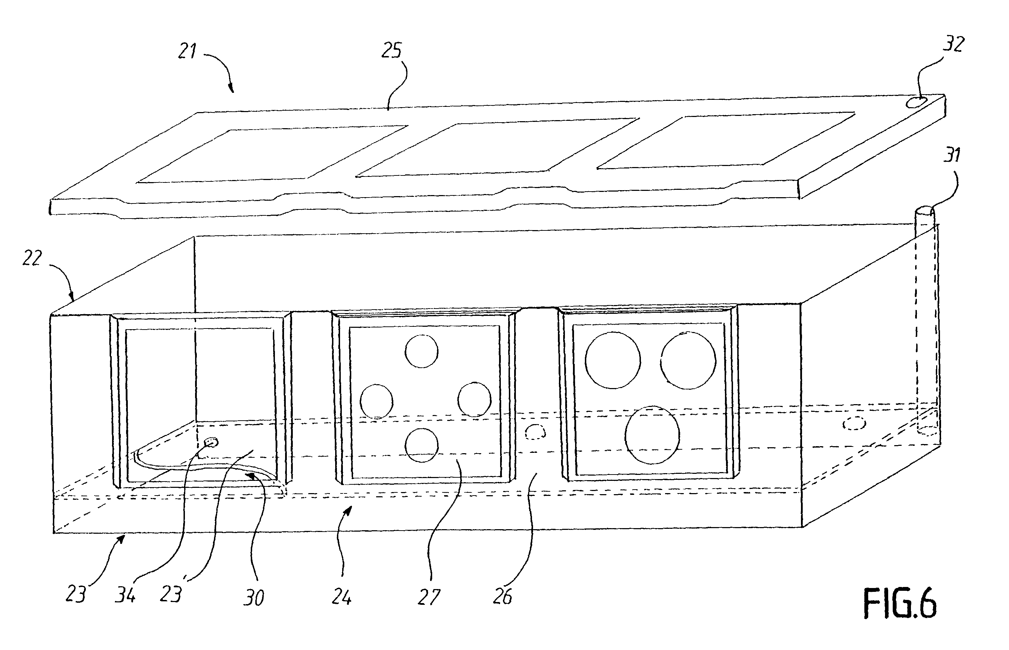

La figure 6 illustre un autre conteneur 21 de forme rectangulaire destiné à constituer une jardinière qui peut se poser par exemple sur un mur, un rebord ou devant une fenêtre. Pour cette raison, seule une face latérale 24 comporte des panneaux amovibles 27. Ce conteneur 21 est réalisé selon le même principe que celui de la figure 5. Il comporte une réserve d'eau 30, un double fond 23', un tube d'alimentation 31 qui dépasse du couvercle 25 par un orifice 32. Des mèches sont également prévues au travers de trous 34 pour alimenter en eau les mottes de terre. Bien entendu, il peut également recevoir une couronne d'arrosage si besoin.

Ainsi qu'il apparaît dans ces différents exemples de réalisation, le conteneur de fleurissement 1 selon l'invention permet des utilisations particulièrement variées en même temps qu'une liberté et une optimisation de la répartition des plantes fleuries selon le type de plante, et donc également en fonction des saisons. Ses nombreuses possibilités offertes par la variété des panneaux amovibles et des couvercles ainsi que ses différentes possibilités de mise en place en font un conteneur de fleurissement multi-usage idéal. Si le conteneur est simplement suspendu, il est possible d'obturer par un bouchon l'ouverture 12' ménagée dans le fond 3 dans le cas du conteneur de la figure 1. De plus, de tels bacs peuvent être fabriqués à partir de matière plastique rigide renforcée contre les rayons ultraviolets, ce qui les rendent à la fois léger, résistant mécaniquement et vis-à-vis du rayonnement solaire, faciles à entretenir.

D'autre part, la structure de ces conteneurs facilite et réduit considérablement le stockage, étant donné que le conteneur est unique pour une multitude de panneaux amovibles, ce qui est un avantage supplémentaire.

Pour augmenter encore le volume de fleurissement, ces conteneurs peuvent être regroupés, et notamment superposés ou accolés.

De même, le volume de terre ou de terreau peut être adapté si besoin, au moyen de panneaux amovibles 7 ajourés sur une partie seulement de leur hauteur. La surface libre maximale est obtenue lorsque l'on n'utilise aucun panneau 7 latéralement, et à l'opposé, les faces 4 peuvent être munies de panneaux 7 totalement obturant pour un volume fermé maximal.

A titre d'exemple non limitatif, le conteneur de fleurissement peut être utilisé au printemps et en été avec des panneaux latéraux et un couvercle ajourés pour des plantes telles que des géraniums ou des bidens, et par simple changement des panneaux latéraux et enlèvement du couvercle, il peut encore être utilisé durant l'automne pour des chrysanthèmes cascades. Avec des panneaux ouverts en U, il est possible de les positionner à l'endroit ou à l'envers ce qui permet de fleurir le conteneur à des hauteurs différentes selon les faces. D'autre part, il est pratique de pouvoir placer des panneaux fermés sur les faces qui ne sont pas destinées à participer au fleurissement.

La présente invention n'est pas limitée aux exemples de réalisation décrits mais s'étend à toute modification et variante conforme aux revendications. Notamment, le nombre de panneaux amovibles par face est variable suivant la dimension du conteneur. De même, bien que l'utilisation de glissières soit particulièrement adaptée, le mode de fixation des panneaux sur les faces n'est pas limité à celui décrit mais s'étend à toute variante conforme aux revendications. Bien entendu, le nombre, la taille, la forme des ouvertures ménagées dans les panneaux amovibles et dans le couvercle peuvent varier.

De même, la forme générale des panneaux, du couvercle et du bac ne se limitent pas à ceux décrits, mais peut varier en fonction de l'effet décoratif recherché.

D'autre part, une composition à base de matière plastique traitée contre les ultraviolets convient tout particulièrement pour un tel conteneur, cependant tout autre type de matériau adapté à des utilisations extérieures et sous contrainte mécanique telle que le poids du contenu, peut convenir. L'essentiel est de conserver une structure suffisamment rigide pour que le conteneur puisse être suspendu.

Le moyen choisi pour suspendre un tel conteneur peut également varier. Notamment, les anneaux peuvent être remplacés par des trous dans le bac, ou encore des crochets.

## Revendications

1. Conteneur de fleurissement (1, 21) constitué d'un bac (2, 22) comportant au moins un fond (3, 23) et plusieurs faces latérales (4, 24), son fond (3, 23) et ses faces latérales (4, 24) étant rigidement solidaires pour former une structure rigide indéformable, au moins une face latérale (4, 24) étant constituée d'au moins un cadre fixe (6, 26 ajouré et d'au moins un panneau central amovible (7, 27), **caractérisé en ce que**, ledit panneau central amovible (7, 27) comporte au moins une ouverture (8, 28).

2. Conteneur selon la revendication 1, **caractérisé en ce qu'**il comporte un couvercle (5, 25) pourvu d'au moins une ouverture (11, 41).

3. Conteneur selon la revendication 1 ou 2, **caractérisé en ce que** les ouvertures (8, 28, 11, 41) ont une forme choisie parmi le groupe comprenant : une forme carrée, rectangulaire, circulaire, ovale, en arc de cercle, lenticulaire, en tuile, en L, en étoile, en coeur.

4. Conteneur selon la revendication 1, **caractérisé en ce que** le bac (2, 22) a une forme choisie parmi le groupe suivant : un cube, un parallélépipède rectangle, un cylindre, un tétraèdre, un octaèdre, un décaèdre, une pyramide, une sphère.

5. Conteneur selon la revendication 1, **caractérisé en ce que** le cadre fixe (6, 26) comporte au moins deux glissières (9) parallèles agencées pour recevoir les bords latéraux du panneau central amovible (7, 27).

6. Conteneur selon la revendication 5, **caractérisé en ce que** le panneau central amovible (7, 27) comporte une poignée (10) à proximité d'au moins un de ses bords libres.

7. Conteneur selon la revendication 1, **caractérisé en ce que** qu'il comporte un double fond (23') destiné à former une réserve d'eau (30), un tube d'alimentation (31) en eau débouchant dans ladite réserve d'eau (30) et des mèches s'étendant de la réserve d'eau (30) à l'intérieur du bac (2, 22) pour remonter l'eau par capillarité.

8. Conteneur selon la revendication 1, **caractérisé en ce qu'**il comporte une couronne d'arrosage (35) disposée dans la partie supérieure du bac (2, 22) et munie d'orifices goutteurs (36) et un tube d'alimentation (40) en eau raccordé à ladite couronne.

9. Conteneur selon la revendication 8, **caractérisé en ce qu'**il comporte au moins un faisceau de filaments goutteurs (38) relié à la couronne d'arrosage (35) par une tête de distribution (37), l'extrémité libre de chaque filament goutteur (38) étant agencée pour être introduite dans les plantes contenues dans ledit bac (2, 22).

10. Conteneur (1) selon la revendication 1, **caractérisé en ce qu'**il comporte des moyens de fixation (12, 12', 13, 45) à un support.

11. Conteneur (1) selon la revendication 10, **caractérisé en ce que** ces moyens de fixation comportent au moins une ouverture (12, 12', 45) agencée pour permettre le passage d'un mat.

12. Conteneur (1) selon la revendication 10, **caractérisé en ce que** les moyens de fixation se composent d'au moins deux anneaux (13) répartis et fixés sur une des faces latérales (4, 24).

13. Conteneur (1) selon la revendication 1, **caractérisé en ce que** le bac (2) se compose de deux demi bacs (15, 15') séparés sur une partie de leur hauteur à partir du fond (3) du bac (2) par un évidement rectiligne (16), perpendiculaire audit fond (3) et agencé pour recevoir un montant parallèle au sol.

## Patentansprüche

1. Blumenbehälter (1,21), der aus einem Kasten (2,22) besteht, der mindestens einen Boden (3,23) und mehrere Seitenflächen (4,24) aufweist, wobei sein Boden (3,23) und seine Seitenflächen (4,24) zur Ausbildung einer unverformbaren Struktur fest miteinander verbunden sind, und wobei mindestens eine Seitenfläche (4,24) aus mindestens einem mit Öffnungen versehenen, festen Rahmen (6,26) und mindestens einer abnehmbaren, mittleren Platte (7,27) besteht, **dadurch gekennzeichnet, dass** die abnehmbare, mittlere Platte (7,27) mindestens eine Öffnung (8,28) aufweist.

2. Behälter nach Anspruch 1, **dadurch gekennzeichnet, dass** er einen mit mindestens einer Öffnung (11,41) versehenen Deckel (5,25) aufweist.

3. Behälter nach Anspruch 1 oder 2, **dadurch gekennzeichnet, dass** die Öffnungen (8,28,11,41) eine aus der aus den folgenden Elementen bestehenden Gruppe ausgewählte Form aufweisen: eine quadratische, rechteckige, kreisförmige, ovale, kreisbogenförmige, linsenförmige, dachziegelförmige, L-förmige, sternförmige, herzförmige Form.

4. Behälter nach Anspruch 1, **dadurch gekennzeichnet, dass** dass der Kasten (2,22) eine aus der aus den folgenden Elementen bestehenden Gruppe ausgewählte Form aufweist: einen Würfel, ein rechteckiges Parallelepiped, einen Zylinder, einen Tetraeder, einen Oktaeder, einen Dekaeder, eine Pyramide, eine Kugel.

5. Behälter nach Anspruch 1, **dadurch gekennzeichnet, dass** der feste Rahmen (6,26) mindestens zwei parallele Laufschienen (9) zur Aufnahme der Seitenränder der abnehmbaren, mittleren Platte (7,27) aufweist.

6. Behälter nach Anspruch 5, **dadurch gekennzeichnet, dass** die abnehmbare, mittlere Platte (7,27) einen Handgriff (10) in der Nähe mindestens eines ihrer freien Ränder aufweist.

7. Behälter nach Anspruch 1, **dadurch gekennzeichnet, dass** er einen doppelten Boden (23') aufweist, der zur Ausbildung eines Wasserreservoirs (30) vorgesehen ist, wobei ein Wasserzufuhrrohr (31) in das Wasserreservoir (30) mündet und sich Stränge von dem Wasserreservoir (30) in das Innere des Kastens (2,22) erstrecken, damit das Wasser durch Kapillarität wieder hinaufsteigen kann.

8. Behälter nach Anspruch 1, **dadurch gekennzeichnet, dass** er einen in dem Oberteil des Kastens (2,22) angeordneten Bewässerungsring (35) mit Tropföffnungen (36) und ein mit dem Ring verbundenes Wasserzufuhrrohr (40) aufweist.

9. Behälter nach Anspruch 8, **dadurch gekennzeichnet, dass** er mindestens ein Bündel von über einen Verteilerkopf (37) mit dem Bewässerungsring (35) verbundenen Tropffasern (38) aufweist, wobei das freie, äußerste Ende einer jeden Tropffaser (38) zum Hineinführen in die in dem Kasten (2,22) vorhandenen Pflanzen vorgesehen ist.

10. Behälter nach Anspruch 1, **dadurch gekennzeichnet, dass** er Mittel (12,12',13,45) zur Befestigung an einer Halterung aufweist.

11. Behälter nach Anspruch 10, **dadurch gekennzeichnet, dass** die Befestigungsmittel mindestens eine Öffnung (12,12',45) aufweisen, die zum Hindurchführen eines Mastes vorgesehen ist.

12. Behälter nach Anspruch 10, **dadurch gekennzeichnet, dass** die Befestigungsmittel aus mindestens zwei Ringen (13) bestehen, die auf einer der Seitenflächen (4,24) verteilt und befestigt sind.

13. Behälter (1) nach Anspruch 1, **dadurch gekennzeichnet, dass** der Kasten (2) aus zwei Halbkästen (15,15') besteht, die über einen Teil ihrer Höhe ab dem Boden (3) des Kastens (2) durch eine senkrecht zu dem Boden (3) verlaufende, geradlinige Aussparung (16) getrennt sind, die zur Aufnahme eines parallel zum Boden verlaufenden Pfostens vorgesehen ist.

## Claims

1. A container for flowers (1, 21) formed of a tank (2, 22) comprising at least one base (3, 23) and several lateral faces (4, 24), its base (3, 23) and its lateral faces (4, 24) being rigidly integral to form an non-deformable rigid structure, at least one lateral face (4, 24) being formed by at least one perforated fixed frame (6, 26) and at least one detachable central panel (7, 27), **characterised in that** the said detachable central panel (7, 27) comprises at least one aperture (8, 28).

2. A container according to Claim 1, **characterised in that** its comprises a cover (5, 25) provided with at least one aperture (11, 41).

3. A container according to Claim 1 or 2, **characterised in that** the apertures (8, 28, 11, 41) have a shape chosen from the group comprising: a square shape, rectangular shape, circular shape, oval shape, arc of a circle shape, tens shape, tile shape, L shape, star shape, heart shape.

4. A container according to Claim 1, **characterised in that** the tank (2, 22) has a shape chosen from the following group: a cube, a rectangular parallelepiped, a cylinder, a tetrahedron, an octahedron, a decahedron, a pyramid, a sphere.

5. A container according to Claim 1, **characterised in that** the fixed frame (6, 26) comprises at least two parallel slides (9) designed to receive the lateral edges of the detachable central panel (7, 27).

6. A container according to Claim 5, **characterised in that** the detachable central panel (7, 27) comprises a handle (10) close to at least one of its free edges.

7. A container according to Claim 1, **characterised in that** it comprises a double base (23') intended to form a water store (30), a water supply tube (31) discharging into the said water store (30) and wicks extending from the water store (30) to inside the tank (2, 22) to make the water rise by capillary action.

8. A container according to Claim 1, **characterised in that** its comprises a sprinkling ring (35) disposed in the upper part of the tank (2, 22) and equipped with dripping outlets (36) and a water supply tube (40) connected to the said ring.

9. A container according to Claim 8, **characterised in that** it comprises at least a bundle of dripping filaments (38) connected to the sprinkling ring (35) by a distribution head (37), the free end of each dripping filament (38) being designed to be introduced into the plants contained in the said tank (2, 22).

10. A container (1) according to Claim 1, **characterised in that** it comprises means for attachment (12, 12', 13, 45) to a support.

11. A container (1) according to Claim 10, **characterised in that** these attachment means comprise at least one aperture (12, 12', 45) designed to allow the passage of a mat.

12. A container (1) according to Claim 10, **characterised in that** the attachment means consist of at least two rings (13) distributed over and fixed to one of the lateral faces (4, 24).

13. A container (1) according to Claim 1, **characterised in that** the tank (2) consists of two half-tanks (15, 15') separated over a part of their height from the base (3) of the tank (2) by a rectilinear recess (16), perpendicular to the said base (3) and designed to receive a post parallel to the ground.
